# EUROPEAN PATENT APPLICATION

(11) **EP 2 018 001 A1**
(43) Date of publication of application: **21.01.2009**
(21) Application number: 07301257.7
(22) Date of filing: 20.07.2007
(51) Int. Cl.: H04L 12/28

(54) **A method for routing traffic across an IP-based transport network in a mobile network**

(71) Applicant: Alcatel Lucent, 75008 Paris (FR)
(72) Inventor: Fiat, Lionel, 92380 Garches (FR)
(74) Representative: El Manouni, Josiane

(57) **Abstract**

One object of the present invention is a method for routing traffic across an IP-based transport network in a mobile network, to/from a mobile network node serving a mobile terminal, said method comprising the steps of:
- allocating a dedicated IP address to said mobile terminal for traffic routing purpose within said IP-based transport network,
- tunnelling said-traffic across said IP-based transport network, using a mobile network specific tunnelling protocol, with the IP address of a tunnel endpoint corresponding to said serving node set to said dedicated IP address allocated to said mobile terminal.

## Description

The present invention generally relates to mobile communication networks and systems.

Detailed descriptions of mobile communication networks and systems can be found in the litterature, in particular in Technical Specifications published by standardisation bodies such as in particular 3GPP (3^{rd} Generation Partnership Project).

It is simply recalled that in a mobile communication system a mobile terminal (also called Mobile Station MS, or User Equipment UE) has access to mobile services, such as in particular 3GPP services, delivered by a Core Network CN via an Access Network AN. There are different types of mobile services such as in particular Packet Switched (PS) services, and the CN comprises different domains such as in particular a PS domain.

3GPP CN PS domain includes entities like GGSN (Gateway GPRS Support Node) serving as gateway node to an external Packet Data Network PDN, and SGSN (Serving GPRS Support Node) serving as serving node for access to mobile PS services. SGSN and GGSN nodes are interconnected by an IP-based transport network. Packet traffic is tunnelled across this IP-based transport network using a mobile network specific tunnelling protocol called GTP (GPRS Tunneling Protocol). GTP tunnelling includes encapsulating each packet with a GTP header containing tunnelling information. Tunnelling information includes TEID (Tunnel Endpoint Identifier) allowing multiple tunnels (related to a same user or to different users) having same source and destination nodes. A detailed description of GTP protocol can be found in particular in 3GPP TS 29.060.

A GTP tunnel is set-up or modified at PDP (Packet Data Protocol) Context activation or modification. A PDP context contains information (such as in particular address information and QoS information) necessary for routing purpose within said IP-based transport network. A GTP tunnel can be switched from one SGSN to another when the mobile terminal performs an inter-SGSN Routing Area update procedure. In such case, the new SGSN requests the PDP context from the ald SGSN, and a new GTP funnel is set-up between the new SGSN and the GGSN. A detailed description of Session Management (SM) and Mobility Management (MM) can be found in particular in 3GPPTS 24.008 and 3GPP TS 23.060.

GTP technology has certain advantages, in particular it enables multi-tunnels over IP for a mobile user towards different PDNs with all signaling information requested by an operator at an access edge. However, with current implementation, it also has some drawbacks, in particular it is not well adapted to network evolutions, in particular evolutions towords All-IP network, contrary to Mobile IP (MIP) technology.

Mobile IP is specified by IETF. It is recalled that Mobile IP allows a MN (Mobile Node) to maintain connectivity to an external PDN using a single and unchanging address (its home address) even when the link layer point of attachment is changing. When the MN moves from the home network to a foreign network it registers with its Home Agent HA an IP address (the Care Of Address COA in Colocated mode or with the Foreign Agent Adress in FA mode) that the HA can use to tunnel packets to the MN. The HA intercepts packets addressed to the MN's home address and tunnels these packets to the COA.

One object of the present invention is to avoid such drawbacks while preserving such advantages of GTP technology.

One example of application of the present invention which will be more particularly considered in the following is the application to a 3GPP/non 3GPP interworking architecture enabling to extend the access to 3GPP PS services to subscribers in non 3GPP environment; however the present invention is not limited to 3GPP/non 3GPP interworking, in particular it applies to 3GPP mobile networks and their evolutions. An example of non 3GPP technology which will more particularly be considered in the following is WiMAX technology; however the present invention is not limited to such example.

A description of WiMAX technology can be found in particular in IEEE 802.16e and WIMAX Forum standards. As disclosed in Technical Specification "WiMAX End-to-End Network Systems Architecture", a Mobile Station MS has access to a Connectivity Service Network CSN via an Access Service Network ASN. ASN is defined as a set of network functions needed to provide radio access to a WiMAX subscriber. CSN is defined as a set of network functions that provide IP connectivity services to a WiMAX subscriber. Macromobility between the ASN and CSN is based on MIP.

A system description for interworking between 3GPP and WiMAX can be found in particular in the document WiMAX Forum Network Architecture (Stage 3: Detailed Protocols and Procedures) [Annex: WiMAX - 3GPP Interworking]. As mentioned in this document, in the near term WiMAX interworking shall be compatible with WLAN-3GPP interworking (as defined in the .234 family which mainly includes TS 24.234, TS 29.234 and TS 33.234), and the long term architecture shall be aligned with 3GPP SAE (System Architecture Evolution) work.

It is recalled that WLAN technology is another example of non 3GPP access technology. A description of WLAN technology can be found in particular in the IEEE 802.11 specification family.

A system description for interworking between 3GPP systems and WLANs can be found in particular in 3GPP TS 23.234. The intent of 3GPP - WLAN interworking is to extend 3GPP services and functionality to the WLAN access environment. There are different Interworking Scenarios, with different interworking requirements. In particular, the aim of Scenario 3 is to extend the access to 3GPP PS services to subscribers in a WLAN environment, and the aim of Scenario 4 is, in addition, to maintain service continuity between 3GPP and WLAN access technologies, i.e. to allow users to room to and from 3GPP and WLAN access technologies while keeping ongoing sessions.

3GPP-WLAN interworking architecture includes entities like PDG (Packet Data Gateway). User data traffic is tunnelled to a PDG using an IPsec tunnel, and then routed to the external PDN to which the user wants to connect. 3GPP TS 23.234 also describes a PDG implementation re-using GGSN (Gateway GPRS Support Node) functionality, wherein the PDG is composed of two components, TTG (Tunnel Termination Gateway) and Subset of GGSN functions; the IPsec tunnel is then terminated by the TTG part of the PDG, and the setup of a GTP tunnel is triggered towards the GGSN part of the PDG.

Different solutions have been proposed to maintain service continuity between 3GPP and WLAN access technologies, as required by Interworking Scenario 4.

One solution is to use the above recalled PDG implementation whereby the PDG is composed of two components, TTG and subset of GGSN functionalities. When the Mobile Station moves from 3GPP access to WLAN access, a Routing Area update is performed, whereby the TTG requests the PDP context from the SGSN, as in a inter-SGSN Routing Area Update procedure, and a new GTP tunnel is set-up between the TTG part and the GGSN part of the PDG.

In such context, one object of the present invention is to avoid the above mentioned drawbacks of GTP while preserving its advantages.

As already mentioned, it should however be understood that the present invention is more general and in particular is not limited to such application.

These and other objects of the present invention are achieved, in one aspect of the present invention, by a method for routing traffic across an IP-based transport network in a mobile network, to/from a mobile network node serving a mobile terminal, said method comprising the steps of:
- allocating a dedicated IP address to said mobile terminal for traffic routing purpose within said IP-based transport network,
- tunnelling said traffic across said IP-based transport network, using a mobile network specific tunnelling protocol, with the IP address of a tunnel end point corresponding to said serving node set to said dedicated IP address allocated to said mobile terminal.

Advantageously, said method further comprises a step of:
- tunnelling said traffic to/from a serving node supporting Mobile IP protocol, using said mobile network specific tunnelling protocol above Mobile IP protocol.

Advantageously, said dedicated IP address allocated to said mobile terminal corresponds to a Home IP address within Mobile IP protocol.

These and other objects are achieved, in another aspect of the present invention, by a mobile network entity, such as in particular SGSN, WAC/TTG, comprising means for performing a method according to the present invention.

In particular, another aspect of the present invention is a mobile network entity, comprising, for routing traffic across an IP-based transport network in said mobile network, to/from a mobile network node serving a mobile terminal:
- means for allocating a dedicated IP address to said mobile terminal, for traffic routing purpose within said IP-based transport network.

In particular, another aspect of the present invention is a mobile network entity, comprising, for routing traffic across an IP-based transport network in said mobile network, to/from a mobile network node serving a mobile terminal:
- means for tunnelling traffic across said IP-based transport network , using a mobile network specific tunnelling protocol, with the IP address of a tunnel endpoint corresponding to said serving node set to a dedicated IP address allocated to said mobile terminal for traffic routing purpose within said IP-based transport network.

These and other objects of the present invention will become more apparent from the following description taken in conjunction with the accompanying drawings:
- figure 1 is intended to illustrate an example of a 3GPP/WiMAX interworking system architecture using the present invention, in the case of a serving node SGSN not supporting MIP, i.e. in the case where no Foreign Agent is implemented at SGSN,
- figures 2 and 3 are intended to illustrate different examples of signaling exchanged or procedures performed according to the present invention, corresponding to different examples of mobility situations, in the example of system architecture illustrated in figure 1,
- figure 4 is intended to illustrate an example of a 3GPP/WiMAX interworking system architecture using the present invention, in the case of a serving node SGSN supporting MIP, i.e. in the case where a Foreign Agent is implemented at SGSN,
- figures 5 and 6 are intended to illustrate different examples of signaling exchanged or procedures performed according to the present invention, corresponding to different examples of mobility situations, in the example of system architecture illustrated in figure 4.

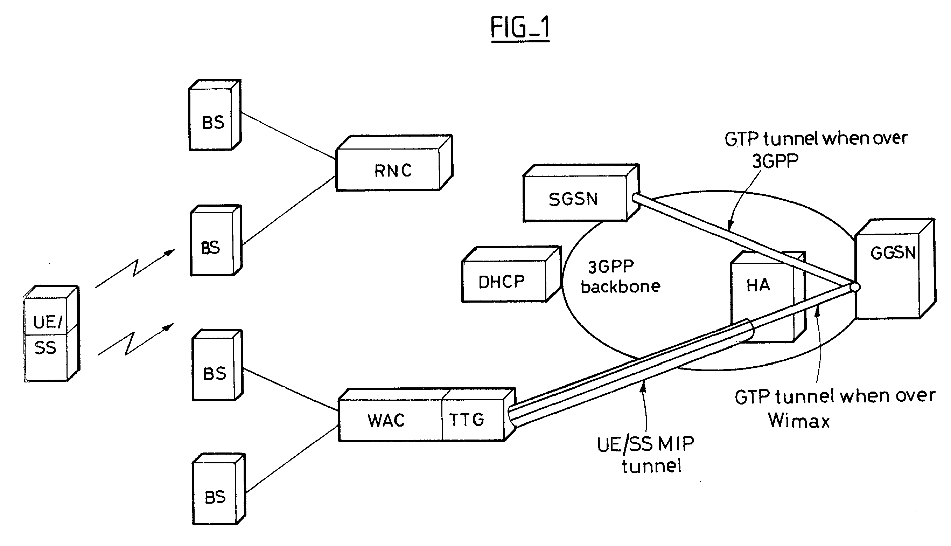

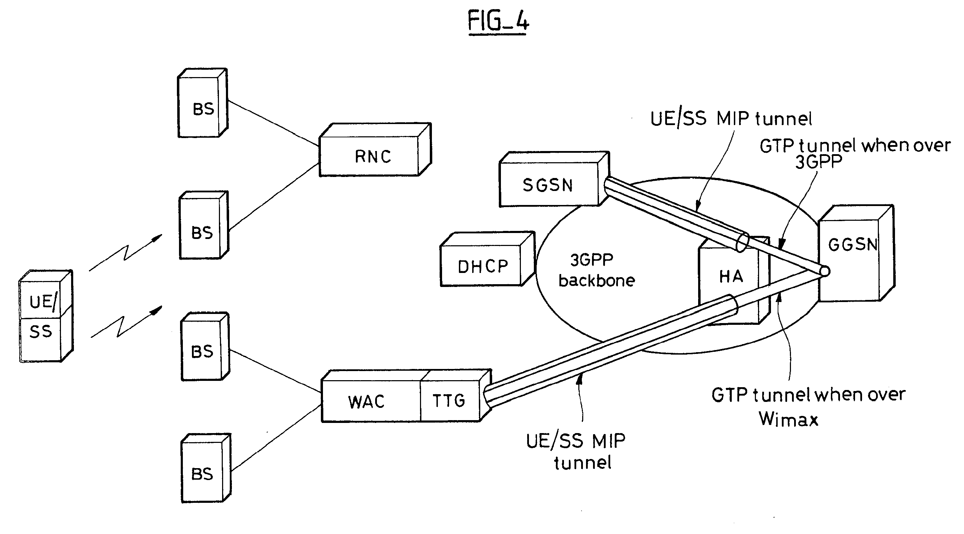

In the examples illustrated in figures 1 and 4, the system comprises:
- a dual-mode mobile station UE (User Equipment)/SS (Subscriber Station) having access to a 3GPP core network either via a 3GPP access network or via a WiMAX access network,
- a 3GPP Access Network,
- a WiMAX Access Network,
- a 3GPP Core Network.

The 3GPP Access Network comprises at least one Radio Network Controller RNC and at least one Base Station (or Node B) BS.

The WiMAX Access Network comprises at least one WIMAX Access Controller WAC, and at least one Base Station BS.

The 3GPP Core Network comprises at least one GGSN, at least one SGSN, and at least one TTG associated with a WAC, such association being noted WAC/TTG.

In the example illustrated in figures 1 and 4, the system also comprises a Home Agent HA which is located in the 3GPP Core Network, a Foreign Agent (not illustrated) located at the WAC, and an address server (corresponding to a Dynamic Host Configuration Protocol DHCP server). In the example illustrated in figure 4, the system also comprises a Foreign Agent located at the SGSN.

In these illustrated examples, the present invention may also be explained as follows.

In these illustrated examples, the present invention proposes to use GTP over MIP, and to replace the IP address of the GTP tunnel endpoint at a serving node side (almost for data plane), which, is currently the serving node IP address itself, by a dedicated terminal IP address allocated to the mobile terminal for routing purpose within the 3GPP mobile core network.

So, in these illustrated examples:
- when the terminal is connected over 3GPP Access Network, the GTP tunnel endpoint IP address at SGSN side is a terminal Home IP address
- when the terminal is connected over WiMAX Access Network, the WiMAX WAC implements the TTG (3GPP I-WLAN solution) functions, i.e. SGSN GTP stack, and the GTP tunnel endpoint IP address is a terminal Home IP address, this Home IP address of the terminal is provided to GGSN: the real downlink GTP packets are routed with MIP to the good GTP tunnel endpoint.

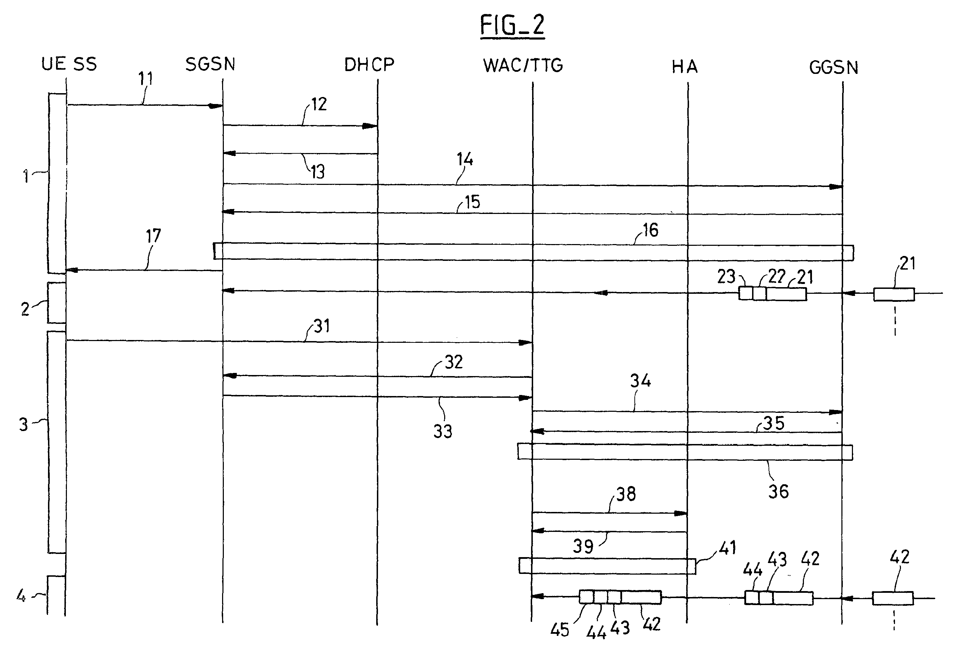

In the example illustrated in figure 2, there is considered the case of a mobile terminal establishing a session while under 3GPP coverage, and moving to WiMAX coverage in the course of this session, in the example of system architecture illustrated in figure 1.

The steps of establishing a session while under 3GPP coverage, generally noted 1 in figure 2, include the following steps:
- in step 11, the UE sends to its serving SGSN a request for session establishment,
- in step 12, in one aspect of the present invention, the SGSN sends to the DHCP server a request for a dedicated address to be allocated to the UE, for routing purpose within the 3GPP mobile core network,
- in step 13, the DHCP server returns to the SGSN a dedicated IP address allocated to the UE, which in the illustrated example is a UE Home IP address (within MIP).
- in step 14, the SGSN sends to the GGSN information necessary for the creation of a PDP context and the set-up of a GTP tunnel. In one aspect of the present invention, in the illustrated example, routing information sent by the SGSN to the GGSN include the dedicated Home IP address allocated to the UE,
- in step 15, the GGSN sends to the SGSN information necessary for the creation of a PDP context and the set-up of a GTP tunnel,
- in step 16, as a result, a GTP tunnel is established between SGSN and GGSN and a PDP context is created at SGSN side and at GGSN side. In one aspect of the present invention, in the illustrated example, the routing information contained in the PDP context created at GGSN side include the dedicated Home IP address allocated to the UE, which will therefore replace the SGSN IP address currently used according to the above-recalled prior art, in further steps of the method,
- in step 17, the SGSN sends to the UE information necessary for the creation of a PDP context of UE side.

The routing of packets during the thus established session, while under 3GPP coverage, generally noted 2 in figure 2, includes the following steps:
- the GGSN adds to a received packet 21 a GTP header 22 and a IP header 23. In one aspect of the present invention, in the illustrated example, the destination IP address contained in the IP header is the dedicated Home IP address allocated to the UE,
- the packet is received by the SGSN which removes the headers and forwards the packet towards the UE according to the procedures applicable within the 3GPP Access Network.

The steps of handover of this packet connection when moving from 3GPP coverage to WiMAX coverage, generally noted 3 in figure 2, include the following steps:
- in step 31, the UE sends to the TTG a request for handover of the packet connection,
- in step 32, the TTG sends to the SGSN a request for PDP context information,
- in step 33, the SGSN sends the requested information to the TTG. In one aspect of the present invention, in the illustrated example, the routing information contained in the PDP context transferred from SGSN to TTG include the dedicated Home IP address allocated to the UE,
- in step 34, the TTG sends to the GGSN information necessary for the modification of the GTP tunnel and PDP context,
- in step 35, the GGSN sends to the TTG information necessary for the modification of the GTP tunnel and PDP context,
- in step 36, as a result a new GTP tunnel is established between TTG and GGSN, and the PDP context is modified accordingly at the TTG side and at the GGSN side. In one aspect of the present invention, in the illustrated example, the routing information contained in the PDP context created at GGSN, side include the dedicated Home IP address allocated to the UE, which will therefore replace the TTG IP address currently used according to the above-recalled prior art, in further steps of the method,
- in step 38, the WAC uses proxy MIP mode and so sends a MIP Registration Request to the HA,
- in step 39, the HA sends a MIP Registration Reply to the WAC,
- in step 41, as a result a MIP tunnel is established between HA and WAC. The routing of packets for this packet connection, while under WiMAX coverage, generally noted 4 in figure 2, includes the following steps:
- the GGSN adds to a received packet 42 a GTP header 43 and a IP header 44. In one aspect of the present invention, in the illustrated example, the destination IP address contained in the IP header is the dedicated Home IP address allocated to the UE,
- the packet is intercepted by the HA which odds o MIP header 45, therefore allowing the packet to be tunnelled towards the WAC/TTG,
- the packet is received by the WAC/TTG which removes the headers and forwards the packet towards the SS according to the procedures applicable within the WiMAX Access Network.

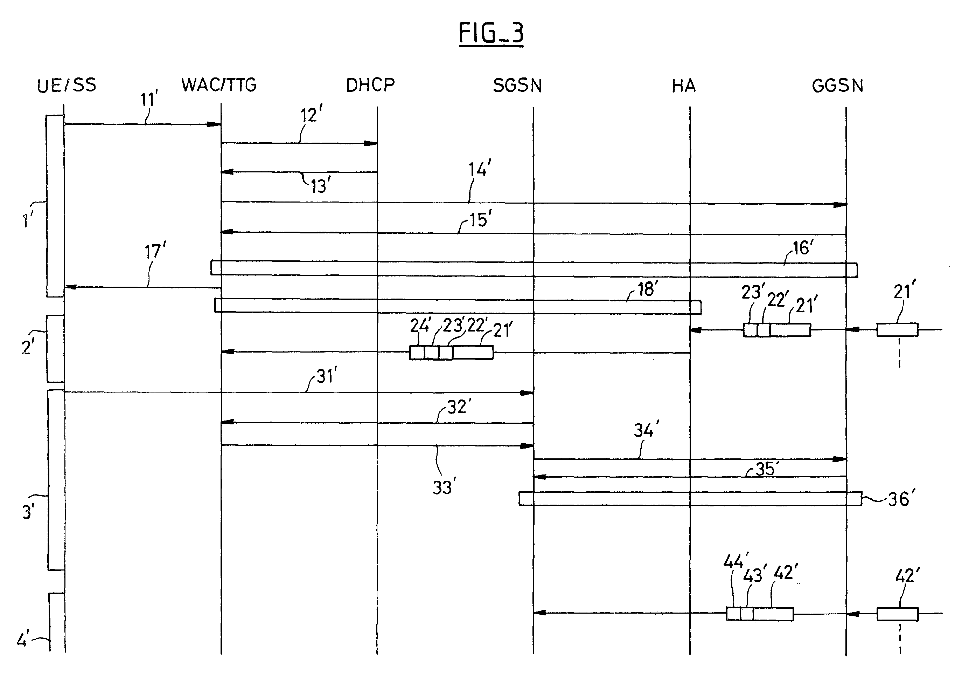

In the example illustrated in figure 3, there is considered the case of a mobile terminal establishing a session while under WiMAX coverage, and moving to 3GPP coverage in the course of this session, in the example of system architecture illustrated in figure 1.

The steps of establishing a session while under WiMAX coverage, generally noted 1' in figure 3, include steps noted 11' to 17', similar to steps 11 to 17 of figure 2, with SGSN replaced by WAC/TTG and vice versa in figure 3 as opposed to figure 2, and an additional step noted 18', corresponding to a step wherein a MIP tunnel is established between WAC/TTG and HA (the steps of setting up this MIP tunnel not being specifically illustrated).

The routing of packets during the thus established session, while under WiMAX coverage, generally noted 2' in figure 3, includes a step similar to the one illustrated at 2 in figure 2, i.e.:
- the GGSN adds to a received packet 21' a GTP header 22' and a IP header 23',
   and an additional step wherein:
- the packet is intercepted by the HA which adds a MIP header 24', thereby allowing the packet to be tunnelled towards the WAC/TTG.

The steps of handover of this packet connection when moving from WiMAX coverage to 3GPP coverage, generally noted 3' in figure 3, include steps noted 31' to 36', similar to steps 31 to 36 of figure 2, with SGSN replaced by WAC/TTG and vice versa in figure 3 as opposed to figure 2.

The routing of packets for this packet connection, while under 3GPP coverage, generally noted 4' in figure 3, includes includes a step similar to the one illustrated at 4 in figure 2, wherein:
- the GGSN adds to a received packet 42' a GTP header 43' and a IP header 44'.

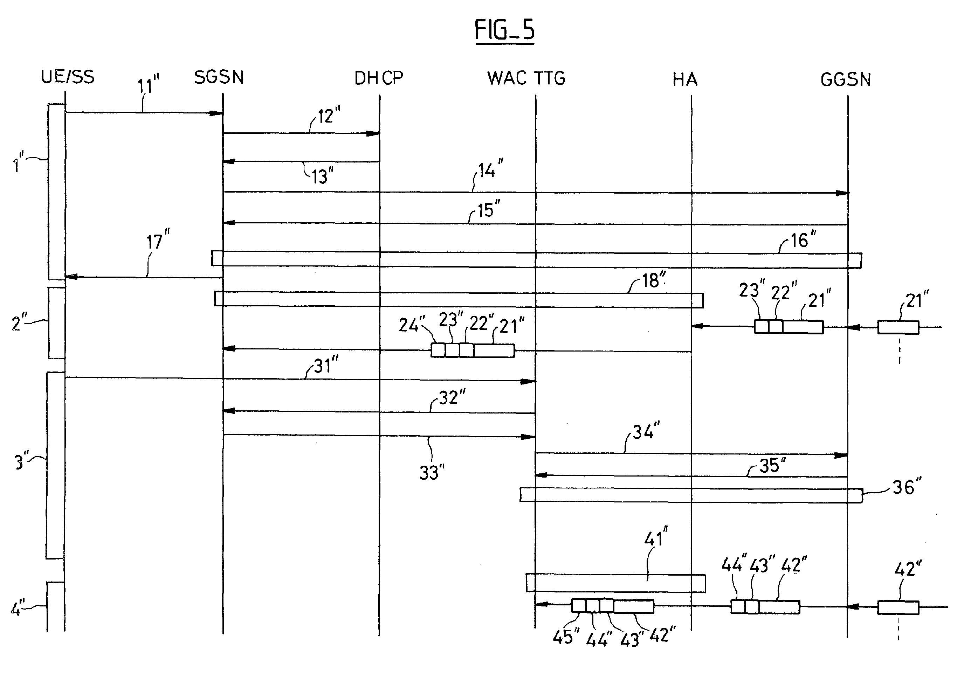

In the example illustrated in figure 5, there is considered the case of a mobile terminal establishing a session while under 3GPP coverage, and moving to WiMAX coverage in the course of this session, in the example of system architecture illustrated in figure 4.

The steps of establishing a session while under 3GPP coverage, generally noted 1" in figure 5, include steps noted 11" to 17", similar to steps 11 to 17 of figure 2, and on additional step noted 18", corresponding to a step wherein a MIP tunnel is established between SGSN and HA (the steps of setting up this MIP tunnel not being specifically illustrated).

The routing of packets during the thus established session, while under 3GPP coverage, generally noted 2" in figure 5, includes a step similar to the one illustrated at 2 in figure 1, i.e.:
- the GGSN adds to a received packet 21" a GTP header 22" and a IP header 23",
   and an additional step wherein:
- the packet is intercepted by the HA which adds a MIP header 24", thereby allowing the packet to be tunneled towards the SGSN.

The steps of handover of this packet connection when moving from 3GPP coverage to WiMAX coverage, generally noted 3" in figure 5, include steps noted 31" to 36", similar to steps 31 to 36 of figure 2, and an additional step noted 41", corresponding to a step wherein a MIP tunnel is establised between WAC/TTG and HA (the steps of setting up this MIP tunnel not being specifically illustrated).

The routing of packets during the thus established session, while under WiMAX, coverage, generally noted 4" in figure 5, includes steps similar to those illustrated at 4 in figure 2, i.e.:
- the GGSN adds to a received packet 42''' a GTP header 43" and a IP header 44",
- the pocket is intercepted by the HA which adds a MIP header 45", thereby allowing the packet to be tunnelled towards the WAC/TTG.

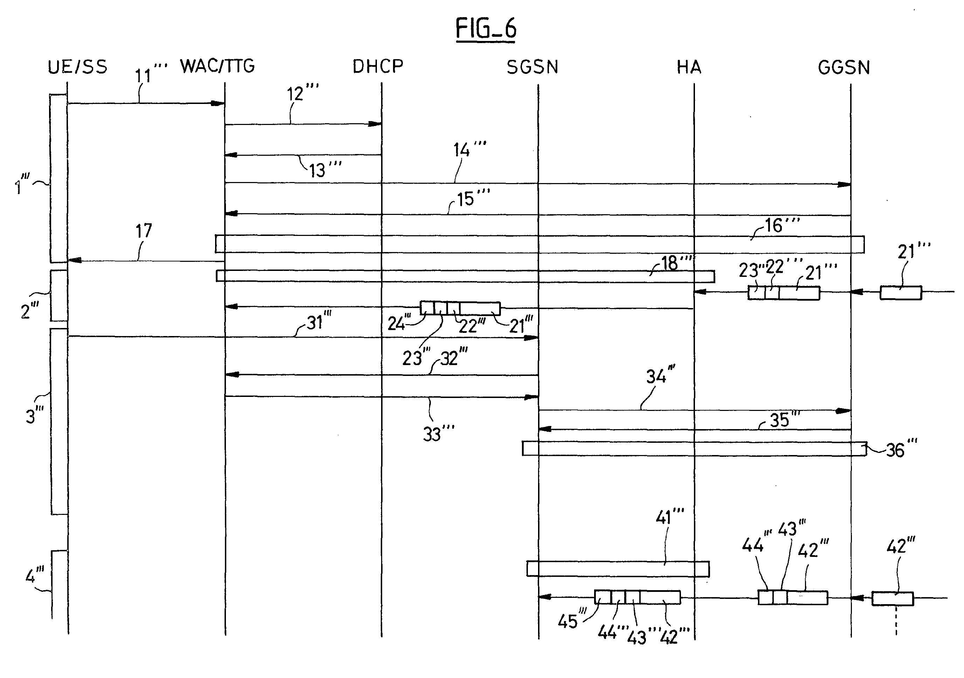

In the example illustrated in figure 6, there is considered the case of a mobile terminal establishing a session while under WiMAX coverage, and moving to 3GPP coverage in the course of this session, in the example of system architecture illustrated in figure 4.

The steps of establishing a session while under WiMAX coverage, generally noted 1''' in figure 6, include steps noted 11''' to 17''', similar to steps 11 to 17 of figure 2 with SGSN replaced by WAC/TTG in figure 6 as opposed to figure 2, and an additional step noted 18''', corresponding to a step wherein a MIP tunnel is established between WAC/TTG and HA (the steps of setting up this MIP tunnel not being specifically illustrated).

The routing of packets during the thus established session, while under WiMAX coverage, generally noted 2''' in figure 6, includes a step similar to the one illustrated at 2 in figure 2, i.e.:
- the GGSN adds to a received packet 21''' a GTP header 22''' and a IP header 23''',
   and an additional step wherein:
- the packet is intercepted by the HA which adds a MIP header 24''', thereby allowing the packet to be tunnelled towards the WAC/TTG.

The steps of handover of this packet connection when moving from WiMAX coverage to 3GPP coverage, generally noted 3''' in figure 6, include steps noted 31''' to 36''', similar to steps 31 to 36 of figure 2, with SGSN replaced by WAC/TTG and vice versa in figure 6 as opposed to figure 2, and an additional step noted 41''', corresponding to a step wherein a MIP tunnel is established between SGSN and HA (the steps of setting up this MIP tunnel not being specifically illustrated).

The routing of packets for this packet connection, while under 3GPP coverage, generally noted 4''' in figure 6, includes includes a step similar to the one illustrated at 4 in figure 2, wherein:
- the GGSN adds to a received packet 42''' a GTP header 43''' and a IP header 44",
   and an additional step wherein:
- the packet is intercepted by the HA which adds a MIP header 45''', thereby allowing the packet to be tunnelled towards the SGSN.

As already mentioned, it should be understood that the present invention is not limited to these illustrated examples.

The present invention in particular has the advantage to be very light to introduce in existing 3GPP solution/products and to enable a smooth migration to next generation All IP network introducing and using MIP too.

The present invention may also be introduced in One Tunnel Work Item of 3GPP which will specify the new GTP end point description at the RNC level for data plane.

In one of its different aspects, the present invention proposes a method for routing traffic across an IP-based transport network in a mobile network, to/from a mobile network node serving a mobile terminal, said method comprising the steps of:
- allocating a dedicated IP address to said mobile terminal for traffic routing purpose within said IP-based transport network,
- tunnelling said traffic across said IP-based transport network, using a mobile network specific tunnelling protocol, with the IP address of a tunnel enpoint corersponding to said serving node set to said dedicated IP address allocated to said mobile terminal.

In addition to a method for traffic routing, such as for example the above disclosed method, the present invention also has for its object entities such as in particular mobile network entities (such as in particular SGSN, WAC/TTG), comprising means for performing a method according to the present invention, an example of which has been disclosed above.

The detailed implementation of the above-mentioned means does not raise any special problem for a person skilled in the art, and therefore such means do not need to be more fully disclosed than has been made above, by their function, for a person skilled in the art.

## Claims

1. A method for routing traffic across an IP-based transport network in a mobile network, to/from a mobile network node serving a mobile terminal, said method comprising the steps of:
- allocating a dedicated IP address to said mobile terminal for traffic routing purpose within said IP-based transport network,
- tunnelling said traffic across said IP-based transport network, using a mobile network specific funnelling protocol, with the IP address of a tunnel endpoint corresponding to said serving node set to said dedicated IP address allocated to said mobile terminal.

2. A method according to claim 1, comprising a step of:
- tunnelling said traffic to/from a serving node supporting Mobile IP protocol, using said mobile network specific tunnelling protocol above Mobile IP protocol.

3. A method according to claim 2, wherein said dedicated IP address allocated to said mobile terminal corresponds to a Home IP address within Mobile IP protocol.

4. A method according to any of claims 1 to 3, comprising a step of:
- allocating said dedicated IP address using an address server.

5. A method according to any of claims 1 to 4, wherein said mobile network specific tunnelling protocol corresponds to GTP protocol.

6. A method according to any of claims 1 to 5, wherein said serving node corresponds to a Serving GPRS Support Node SGSN of a 3GPP mobile core network.

7. A method according to claim 6, wherein a Foreign Agent is implemented at said SGSN.

8. A method according to any of claims 1 to 5, wherein said serving node corresponds to a Tunnel Termination Gateway TTG in a 3GPP/non 3GPP interworking architecture.

9. A method according to claim 8, wherein said 3GPP/non 3GPP interworking architecture corresponds to 3GPP/WiMAX interworking architecture.

10. A method according to claim 9, wherein a Foreign Agent is implemented of a WiMAX Access Controller WAC associated with said Tunnel Termination Gateway TTG .

11. A mobile network entity, comprising, for routing traffic across an IP-based transport network in said mobile network, to/from a mobile network node serving a mobile terminal:
- means for allocating a dedicated IP address to said mobile terminal , for traffic routing purpose within said IP-based transport network.

12. An entity according to claim 11, wherein said dedicated IP address allocated to said mobile terminal corresponds to a Home IP address within Mobile IP protocol.

13. An entity according to claim 11 or 12, comprising:
- means for allocating said dedicated IP address using an address server.

14. An entity according to any of claims 11 to 13, corresponding to a Serving GPRS Support Node SOSN of a 3GPP mobile core network.

15. An entity according to claim 14, wherein a Foreign Agent is implemented at said SGSN.

16. An entity according to any of claims 11 to 13, corresponding to a Tunnel Termination Gateway TTG in a 3GPP/non 3GPP interworking architecture.

17. An entity according to claim 16, wherein said 3GPP/non 3GPP interworking architecture corresponds to 3GPP/WiMAX interworking architecture.

18. An entity according to claim 17, wherein a Foreign Agent is implemented at a WiMAX Access Controller WAC associated with said Tunnel Termination Gateway TTG.

19. A mobile network entity, comprising, for routing traffic across an IP-based transport network in said mobile network, to/from a mobile network node serving a mobile terminal:
- means for tunnelling traffic across said IP-based transport network, using a mobile network specific tunnelling protocol, with the IP address of a tunnel endpoint corresponding to said serving node set to a dedicated IP address allocated to said mobile terminal for traffic routing purpose within said IP-based transport network.

20. An entity according to claim 19, comprising:
- means for sending to another mobile network entity, routing information for the setting up of said tunnel, said routing information including said dedicated IP address allocated to said mobile terminal.

21. An entity according to claim 19 or 20, comprising:
- means for funnelling said traffic to/from a serving node supporting Mobile IP protocol, using said mobile network specific tunnelling protocol above Mobile IP protocol.

22. An entity according to any of claims 19 to 21, wherein said dedicated IP address allocated to said mobile terminal corresponds to a Home IP address within Mobile IP protocol.

23. An entity according to any of claims 19 to 22, wherein said mobile network specific tunnelling protocol corresponds to GTP protocol.

24. An entity according to any of claims 19 to 23, corresponding to a Serving GPRS Support Node SGSN of a 3GPP mobile core network.

25. An entity according to claim 24, wherein a Foreign Agent is implemented at said SGSN.

26. An entity according to any of claims 19 to 23, corresponding to a Tunnel Termination Gateway TTG in a 3GPP/non 3GPP interworking architecture,

27. An entity according to claim 26, wherein said 3GPP/non 3GPP interworking architecture corresponds to 3GPP/WiMAX interworking architecture.

28. An entity according to claim 27, wherein a Foreign Agent is implemented at a WiMAX Access Controller WAC associated with said Tunnel Termination Gateway TTG.
